# EUROPEAN PATENT SPECIFICATION

(11) **EP 2 859 003 B1**
(45) Date of publication and mention of the grant of the patent: **09.11.2016**
(21) Application number: 13736996.3
(22) Date of filing: 10.05.2013
(51) Int. Cl.: C07F 7/21

(54) **N-HETEROCYCLIC-CARBENE-MEDIATED PREPARATION OF POLYHEDRAL SILSESQUIOXANES**
DURCH N-HETEROCYCLISCHES CARBEN VERMITTELTE HERSTELLUNG VON POLYEDRISCHEN SILSESQUIOXANEN
PRÉPARATION À MÉDIATION PAR UN CARBÈNE N-HÉTÉROCYCLIQUE DE SILSESQUIOXANES POLYÉDRIQUES

(30) Priority: 08.06.2012 SI 201200191
(43) Date of publication of application: 15.04.2015
(73) Proprietor: Kemijski Institut, 1000 Ljubljana (SI)
(72) Inventor: OREL, Boris, SI-1000 Ljubljana (SI); KOZELJ, Matjaz, SI-1301 Krka (SI)
(74) Representative: Macek, Gregor
(86) International application number: PCT/SI2013/000027
(87) International publication number: WO 2013/184076

(56) References cited:
- D. B. CORDES; P. D. LICKISS; F. RATABOUL: CHEM. REV., vol. 110, 2010, pages 2081-2173, XP002712101, cited in the application
- LOHMEIJER BAS G G ET AL: "Organocatalytic living ring-opening polymerization of cyclic carbosiloxanes", ORGANIC LETTERS, AMERICAN CHEMICAL SOCIETY, US, vol. 8, no. 21, 12 October 2006 (2006-10-12), pages 4683-4686, XP009143899, ISSN: 1523-7060, DOI: 10.1021/OL0614166 cited in the application
- MATJAZ KOZELJ ET AL.: "N-Heterocyclic carbenes - catalysts for the preparation of polyhedral silsesquioxanes", DALTON TRANSACTIONS, vol. 42, 3 May 2013 (2013-05-03), pages 9432-9436, XP002712102,

## Description

### FIELD OF INVENTION

The present invention relates to methods of using N-heterocyclic carbenes for preparation of polyhedral silsesquioxanes possesing desirable functional substituents thus enabling their use in polymeric and electronic applications.

### BACKGROUND OF INVENTION

Polyhedral (oligomeric) silsesquioxanes (PSS) are compounds with a well-defined structure built from a silicon-oxygen polyhedral network along with organic substitution of the remaining valency on the silicon atom ((RSiO3/2)n; n = 6, 8, 10, 12...). Thus these compounds have found applications in hybrid materials, as nanoconstruction sites, dendrimers, materials for self-assembly, some incompletely condensed silsesquioxanes as soluble silica models and catalyst supports, surface modificators, etc. PSSs are compounds of expanding interest since middle 1990s, as consequence of their employment in technology of polymers, catalyst support, core for dendrimers, etc.

In publication (D. B. Cordes, P. D. Lickiss, F. Rataboul, Chem. Rev. 2010, 110, 2081-2173.) chemistry of polyhedral silsesquioxanes is reviewed. There were no attempts to prepare them using organocatalytic process.

In publications (U. Dittmar, B. J. Hendan, U. Florke, H. C. Marsmann, J. Organornet. Chem. 1995, 489, 185-194. and A. R. Bassindale, Z. H. Liu, I. A. MacKinnon, P. G. Taylor, Y. X. Yang, M. E. Light, P. N. Horton, M. B. Hursthouse, Dalton Trans. 2003, 2945-2949) hydrolytic process is described; but in hydrolytic preparations of PSS, starting from silanes a considerable amount of silsesquioxane resin are produced, but that material could not be reused/recycled in new hydrolytic process. So it is highly desirable that in process for preparation of PSS compounds the already hydrolyzed silanes could be employed.

Silsesquioxane resins, which are offered on the market as raw material for manufacturing of coatings and represent the least toxic and the most economical selection.

In publications and patents: (E. Rikowski, H. C. Marsmann, Polyhedron 1997, 16, 3357-3361., M. Koželj, B. Orel, Dalton Trans. 2008, 5072-5075., US 5 047 492 and AT509428) preparation of polyhedral silsesquioxanes with inorganic bases is disclosed. In order to ensure the solubility of active species, organic bases like tetraalkylammonium hidroxides or fluorides are used; or inorganic salt are solubilized using phase transfer catalysts, like tetraalkylammonium salts or crown ethers. The use of above mentioned catalysts has some disadvantages the major is that in order to remove traces of catalysts and to inactivate them an extra step in the process of isolation of cages from the reaction mixture is needed. This extra step often includes neutralization, in case of acid or base catalyzed reaction, or precipitation of active ion as insoluble solid, in case of fluoride mediated synthesis, the fluoride ions could be precipitated by addition of calcium chloride. So there is a need for utilization of such catalysts that have a very high catalytic activity and do not need to be removed in extra step during isolation, so it is of a special advantage that catalysts are degraded simply by the air or by adding the water.

In publications (B. G. G. Lohmeijer, G. Dubois, F. Leibfarth, R. C. Pratt, F. Nederberg, A. Nelson, R. M. Waymouth, C. Wade and J. L. Hedrick, Org. Lett., 2006, 8, 4683-4686., M. Rodriguez, S. Marrot, T. Kato, S. Stérin, E. Fleury and A. Baceiredo, J. Organomet. Chem., 2007, 692, 705-708) the use of NHCs for preparation of polysiloxanes by ring-opening polymerization (ROP) of cyclic siloxanes or condensation of linear oligomers is diclosed. The chemical reaction in disclosed processes, polymerization, is reverse to the preparation of PSS, which are oligomers.

But there was no attempt to use NHC for catalytic action on transformation of alkoxysilanes. Particularly, it has not yet been reported that NHCs could be used as depolymerisation agent for siloxane polymers, what is crucial step in preparation of PSS from silsesquioxanes resins. Carbenes are very soluble in organic solvents used for preparation of PSS (THF, toluene), what is essential for good activity of homogeneous catalyst. So it is highly desirable that processes for preparation of polyhedral silsesquioxanes mediated by N-heterocyclic carbenes are developed.

### SUMMARY OF THE INVENTION

The present invention discloses the process for use of N-heterocyclic carbenes for the preparation of polyhedral silsesquioxanes from silsesquioxane resin or just hydrolyzed silanes in very good to excellent yields. The catalysts are excellently soluble in the reaction media and could be deactivated by simple exposure to the humid air or excess of water. The N-heterocyclic carbenes are active in a very low concentration starting from 1 mol ‰.

### DESCRIPTION OF PICTURES

Fig 1 represents the ²⁹Si MAS NMR spectra of octa(phenylsilsesquioxane).
Fig 2 represents the ²⁹Si MAS NMR spectra of dodeca(phenylsilsesquioxane).
Fig 3 represents the ²⁹Si NMR spectra of mixture of octa(isobutylsilsesquioxane) and deca(isobutylsilsesquioxane).
Fig 4 represents the ²⁹Si NMR spectra of mixture of various cages produced by refluxing octa(isobutylsilsesquioxane) and octa(3-chloropropylsilsesquioxane).

### DESCRIPTION OF THE INVENTION

The most often appearing polyhedral silsesquioxanes are octameric, T₈, cages which are accompanied by decameric, T₁₀, and dodecameric, T₁₂. The selective process, yielding mostly one compound could be applied by very careful selection of reaction media and catalyst. But the chemical and physical properties of all three PSS compounds are practically the same and there is no need to prepare very pure compound. Especially for application in polymer composition the mixtures are not problematic. Purity and identity of PSS compounds could be most easily determined with ²⁹Si-NMR spectroscopy.

Several preparative methods for polyhedral silsesquioxanes by N-heterocyclic-carbene-mediated reactions are described. All methods for preparation of polyhedral silsesquioxanes by N-heterocyclic carbenes are characterized by dissolving at least one precursor for preparation of polyhedral silsesquioxanes in organic solvent, or in mixture of solvents; adding an N-heterocyclic carbene, or its precursor under inert atmosphere; reacting said mixture at temperature ranging from about -30 °C to about 200 °C. But it is of a special advantage to bring the reaction mixture to the boiling point during PSS preparation and keeping mixture to boil for definite time period. Performing the reaction at the boiling point of the reaction mixture has several advantages, the first is high reaction rate, thus enabling fast and efficient preparation of the PSS; another is connected with utilization of precursors for NHCs, which need certain temperature that the liberation of free carbenes is efficient; and another one is simple control of reaction temperature. However, it is not needed to bring every reaction mixture to the boiling point in order to obtain excellent yields of PSS. Too high temperature could have a deteriorating effect on free carbenes, which have only limited thermal stability, and could affect also on the formation of PSS. So it is desirable that the reaction temperature is maintained between 35 °C and 150 °C.

The time of reaction is dependant on reagent and precursors, but in all cases it ranges from about 5 minutes to 10 days, but it is desirable that there applies reaction times are between 10 minutes and 8 days. To define the exact reaction time the probes for analysis during the reaction could be taken and analyzed to check the presence of starting and resulting materials. These analyses could be most efficiently done by ⁹Si NMR and FT-IR methods. The reaction is stopped when all staring material is consumed and the result are PSS compounds, or in case of equilibrium when the reaction mixture does not change anymore.

When the reaction is accomplished it is cooled to the ambient temperature and the resulting PSS compounds are isolated by precipitation with subsequent filtration or just by solvent evaporation. In some cases the product precipitates already during the reaction so at the end it is only filtered off and dried.

The precursors for preparation of polyhedral silsesquioxanes could be many different silicon compounds, which have three Si-O bonds at each silicon atom. This is typical for trialkoxysilanes and their hydrolytic/condensation products. So the precursors for preparation of polyhedral silsesquioxanes could be made from trialkoxysilanes, triaryloxysilanes, trihalosilanes, trilacyloxysilanes by simple acidic hydrolysis of these silanes. Depending on reaction condition the very different mixtures of products could be obtained, which are best described by following formula:

(R-SiO_{3/2})ₘ × (R-SiO(OH))ₙ × (R-SiO_{1/2}(OH)₂)ₚ,

wherein, the m, n and p are integers and R is functionality of starting trifunctional silane.

In the ultimate case the precursors for preparation of polyhedral silsesquioxanes contain three siloxane bonds, Si-O-Si, at each silicon atom, and these are named completely condensed silsesquioxanes, which are in most cases polymeric. Also already existing cages could be used as precursors for forming PSS of different shape or of different substitution. Under action of NHC catalyst the mixture of two differently substituted PSS cages is transformed into a mixture of many variously substituted, isomeric, PSS compounds.

But it is highly desirable to take commercial products as precursors for preparation of polyhedral silsesquioxanes. There are many suitable products on the market, they are offered as resin binders for special coating one such example is Silres 603, which is chemically incompletely condensed phenylsilsesquioxane, and thus representing excellent raw material for preparation of phenyl polyhedral silsesquioxanes.
If a mixture of different precursors is used a mixture of different heteroleptic, variously substituted, multifunctional, polyhedral silsesquioxanes is obtained. In this manner special PSS compounds could be prepared, which have two or more functionalities thus enabling introduction of several properties into material for which preparation are used.

So the precursor for preparation of polyhedral silsesquioxanes is chosen from the group comprising: polymeric alkylsilsesquioxanes, polymeric arylsilsesquioxanes, already formed polyhedral silsesquioxanes and hydrolyzates of trifunctional silanes.

For the preparation of polyhedral silsesquioxanes various organic solvents could be used. They are chosen from group comprising: alcohols, ethers, esters, amides, cyclic esters, lactones, lactames, aliphatic hydrocarbons, aromatic hydrocarbons, ketones, cyclic ketones, carbonates, cyclic carbonates. But especially appropriate are solvent like THF, diisopropyl ether, toluene, xylenes, acetone, methyl isobutyl ketone and methanol.

To the solution of polyhedral silsesquioxane precursor in organic solvent the catalyst, that is the N-heterocyclic carbene, NHC, is added. NHC compounds are sensitive to moisture and oxygen so it is advantageous when the organic solvent is dried and degassed before the dissolution of PSS precursor. The NHC compunds must be handled in an inert atsmosphere, so weighting is most reasonable done in a dry box and then the NHC is added under stream of nitrogen or argon to the reaction mixture under vigorous stirring. There is another possibility for addition of NHC, there is prepared a solution of NHC in an inert solvent, like THF or toluene and added to reaction mixture by cannula or by syringe, the amount of added carbene is so volumetrically determined and air free handling is easier to perform. The NHC compounds are added to the reaction mixture in a typical concentration from 0.1 mole ‰ to 10 mole % per silicon. It is favourable that NHC is employed in a concentration between 1 mole ‰ to 10 mole % per silicon.

N-heterocyclic carbenes appropriate for preparation of PSS compounds could be chosen from various stable carbenes and their fused analogues, especially substituted imidazol-2ylidenes, represented by general formula: 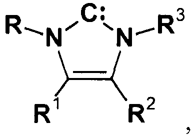 where R^{x} are organic substituents independently chosen from group comprising: halogens, hydrogen, alkyls, aryls, substituted alkyls and substituted aryls, R and R¹ do not represent hydrogen neither halogen; or fused imidazol-2ylidenes, where R¹ and R² represent an aliphatic, aromatic or heteroaromatic ring;
the NHC compounds could also be chosen from substituted imidazolin-2ylidenes, represented by general formula 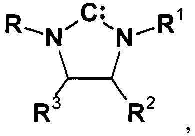 where R^{x} are organic substituents independently chosen from group comprising: halogens, hydrogen, alkyls, aryls, substituted alkyls and substituted aryls, R and R¹ do not represent hydrogen neither halogen; or fused imidazol-2ylidenes, where R¹ and R² represent an aliphatic or heteroaliphatic ring.

Also appropriate are other NHCs like substituted 4,5-dihydro-1*H-*1,2,4-triazol-5-ylidenes and their fused analogues represented by general formula: 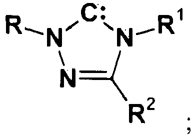 substituted thiazol-2-ylidenes and their fused analogues, represented by general formula: 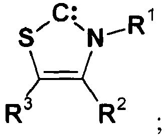 substituted hexahydropyrimin-2-ylidenes and their fused analogues, represented by general formula: 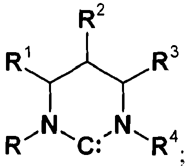 substituted 1,3-diazepam-2-ylidenes and their fused analogues, represented by general formula: 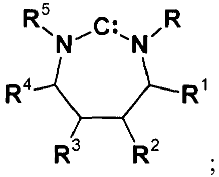 and substituted perimidin-2-ylidenes, represented by general formula: 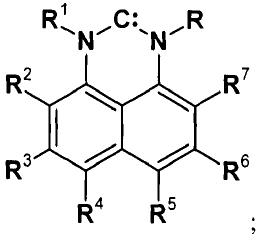 where in all above listed general formulas R^{x} are organic substituents independently chosen from group comprising; halogens, hydrogen, alkyls, aryls, substituted alkyls and substituted aryls, R and R¹ do not represent hydrogen neither halogen.

The NHC precursors are molecules from which the free carbenes could be easily formed especially appropriate are precursors from which carbenes are thermally generated. This is of a special advantage, because the free NHC are sensitive to moisture and oxygen so their handling must be done very carefully, e.g. addition of carbene could be done by cannula or syringe transfer of solution of the free carbene in an inert solvent. On the other hand the precursors for NHCs are less sensitive to moisture and oxygen so the addition of reagents to the reaction mixture does not need special techniques as in case of free carbenes, they could by simply weighted in the air and put into the reaction mixture in solid state. During the reaction the free carbene is liberated upon heating in situ and it could catalyse the reactions of formation of PSS. The applied concentration of precursor is such that the maximum final concentration of liberated carbene is 0.1 mole ‰ to 10 mole % per silicon.

The most appropriate precursors of NHC compounds are: bis(1,3-dialkylimidazol-2-ylidene) silver(I) dihaloargentates(I), represented by general formula: 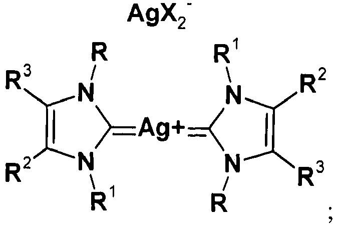 and bis(1,3-dialkylbenzimidazol-2-ylidene) silver(I) dihaloargentates(I) ), represented by general formula: 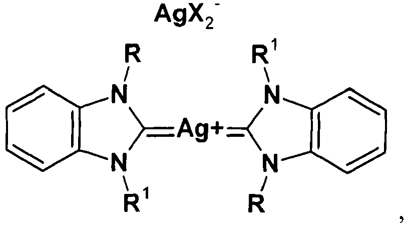 where in all above listed general formulas R^{x} are organic substituents independently chosen from group comprising hydrogen, alkyls, aryls, substituted alkyls and substituted aryls, R and R¹ do not represent hydrogen, and X represent a halogen, that is a fluorine, chlorine, bromine or iodine atom, structures of these compounds could differ from above presented, but in general these formulas are used in literature, but generally they are NHC-silver-halide complexes; besides silver compounds also other metal complexes with carbenes, which dissociate at elevated temperature, could be used as precursors of NHC compounds;
and adducts of free carbenes with aliphatic and aromatic alcohols, chloroform and fluoroform represented by general formula: 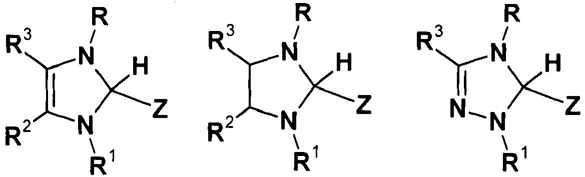 where in all above listed general formulas R^{x} are organic substituents independently chosen from group comprising hydrogen, alkyls, aryls, substituted alkyls and substituted aryls, R and R¹ do not represent hydrogen, Z represents aroxy group, alkoxy group, trifluoromethyl group, trichloromethyl group;
and 1,3-disubstituted-2-(oligofluorophenyl)-imidazolidines, represented by general formula: 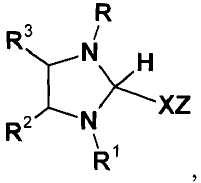 wherein R^{x} are organic substituents independently chosen from group comprising hydrogen, alkyls, aryls, substituted alkyls and substituted aryls, R and R¹ do not represent hydrogen, XZ represents fluorinated aryl group like tetrafluorophenyl, pentafluorophenyl;
and 1,3-disubstituted-imidazolium-2-carboxylates, represented by general formula: 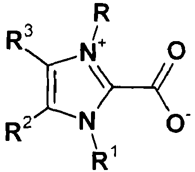 wherein R^{x} are organic substituents independently chosen from group comprising; hydrogen, alkyls, aryls, substituted alkyls and substituted aryls.

The person skilled in the art of NHC chemistry could use other examples of NHCs or their precursors for preparation of PSS compounds.

### EXAMPLES

### General technical remarks:

The chemical were purchased from Aldrich (solvents, organic compounds), ABCR (silicon compounds) and Wacker (Silres603). Solvents for preparation of free carbenes and PSS preparation were freshly distilled from Na/benzophenone under nitrogen and degassed using standard techniques.

The structure of products was determined by FT-IR and ²⁹Si NMR. FT-IR spectra were measured on Bruker IFS 66/S using transmission technique (solutions containing the dissolved resin were dip-coated on a silicon wafer, rapidly dried in stream of cold nitrogen, spectra recorded immediately), the spectra of solid products were measured by KBr pellet technique.

TMS was used as internal standard for all liquid NMR measurements. ²⁹Si NMR spectra of reaction mixtures with D₂O insert lock were recorded at 25° C on Varian Unity INOVA 300 MHz Upgrade spectrometer equipped with 5 mm 1H/19F/X PFG ATB Broadband Probe. Experiments were accelerated by use of the relaxant Cr(acac)₃, which was added to the sample in 0.01 M concentration. Recovery time dropped to only 5 s (33° pulse).

The poorly soluble phenyl PSSs could be effectively measured only by ²⁹Si MAS NMR experiments, which were performed on the same NMR instrument equipped with a 5 mm

MagicAngle Probe for VT CP/MAS. Sodium salt of 3-(trimethylsilyl)-propylsulfonic acid (DSS) was used as external standard.

Carbenes and their precursors were prepared according to published metods:
a) 1,3-di-1-adamantylimidazol-2-ilydene by tBuOK deprotonation of 1,3-bis-(1-adamantyl)imidazolium chloride in THF,
b) 1,3-di-tert-butylimidazol-2-ilydene by tBuOK deprotonation of 1,3-di-tert-butylimidazolium chloride in THF,
c) bis-(3-methyl-l-propyl-imidazol-2-ilydene)silver(I) dichloroargentate(I) and
d) bis-(1-butyl-3-methylimidazol-2-ilydene)silver(I) dichloroargentate(I)
were prepared from 1-butyl-3-methylimidazolium/3-methyl-1-propyl-imidazolium chloride, respectively, with silver(i) oxide in CH₂Cl₂ solution.

### Example 1

### Preparation of Ph₈T₈ using 1,3-di-1-adamantylimidazol-2-ylidene

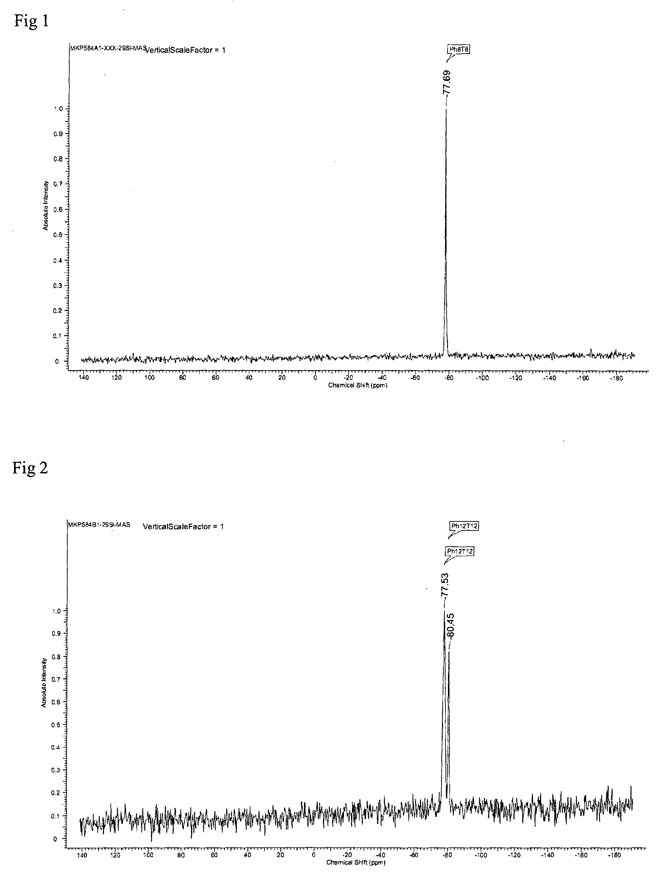

Into a 25 ml round-bottom flask 15 ml of freshly distilled and degassed toluene, a stiring bar and 2.7 g of commercial silsesquioxane resin Silres 603 were placed and stirred until the siloxane was completely dissolved. Then 0.25 mmol of 1,3-bis-(1-adamantyl)imidazol-2-ylidene was added as solution in toluene, under nitrogen and refluxed for 48 hours under nitrogen. The white solid product was filtered off and thoroughly washed with fresh toluene, acetone and finally with methanol and dried in a vacuum oven. The thus obtained product was recrystallized in following manner: the crude product was dissolved in dichloromethane, filtered and than the solvent removed by slow evaporation in fume hood and all residue was analyzed. In this manner 2.25g of octa(phenylsilsesquioxane) was obtained. Ph₈T₈: ²⁹Si MAS NMR (DSS): -77.69 ppm; Fig 1.; IR (KBr, cm⁻¹): very strong siloxane bands at 1111 and 1138.

### Example 2

### Preparation of Ph₈T₈ using bis-(3-methyl-1-propyl-imidazol-2-ilydene)silver(I) dichloroargentate(I)

Into a 25 ml round-bottom flask 15 ml of freshly distilled and degassed benzene, a stiring bar and 2.7 g of commercial silsesquioxane resin Silres 603 were placed and stirred until the siloxane was completely dissolved. Then 0.125 mmol of bis-(3-methyl-1-propyl-imidazol-2-ilydene)silver(I) dichloroargentate(I) was added under nitrogen and refluxed for 48 hours under nitrogen. The white solid product was filtered off and thoroughly washed with fresh toluene, acetone and finally with methanol and dried in a vacuum oven. The thus obtained product was recrystallized in following manner: the crude product was dissolved in dichloromethane and than the solvent removed by slow evaporation in fume hood and all residue was analyzed. In this manner 1.90g of octa(phenylsilsesquioxane) was obtained.

### Example 3

### Preparation of Ph₁₂T₁₂ using 1,3-di-tert-butylylimidazol-2-ylidene

Into a 25 ml round-bottom flask 15 ml of freshly distilled and degassed THF, a stiring bar and 2.7 g of silsesquioxane resin were placed and stirred until the siloxane was completely dissolved. Then 0.25 mmol of 1,3-di-*tert*-butylylimidazol-2-ylidene as solution in THF was added under nitrogen and refluxed for 7 days under nitrogen. The white solid product was filtered off and thoroughly washed with fresh THF toluene, acetone and finally with methanol and dried in a vacuum oven. In this manner 1.75g of dodeca(phenylsilsesquioxane) was obtained. Ph₁₂T₁₂: ²⁹Si MAS NMR (DSS): -77.53 and -80,45 ppm, Fig 2; IR (KBr, cm⁻¹): one very strong siloxane band at 1125.

### Example 4

### Preparation of Ph₁₂T₁₂ using bis-(1-butyl-3-methytimidazol-2-ilydene)silver(I) dichloroargentate(I)

Into a 25 ml round-bottom flask 15 ml of freshly distilled and degassed THF, a stiring bar and 2.7 g of silsesquioxane resin were placed and stirred until the siloxane was completely dissolved. Then 0.125 mmol of bis-(1-butyl-3-methylimidazol-2-ilydene)silver(I) dichloroargentate(I) was added under nitrogen and refluxed for 7 days under nitrogen. The white solid product was filtered off and thoroughly washed with fresh THF toluene, acetone and finally with methanol and dried in a vacuum oven. In this manner 2.35g of dodeca(phenylsilsesquioxane) was obtained.

### Example 5

### Preparation of mixture of iB₁₀T₁₀ and iBu₈T₈ using 1,3-di-1-adamantylimidazol-2-ilydene

The isobutyltrimethoxysilane (iBuTMS) hydrolizate was prepared by dissolution of 3.74 g, 0.021 mol, of iBuTMS in 15 ml of 2:1 mixture of MeOH: AcMe and subsequent addition of 1.13 g of water and 0.23 g of 0.1 M HCl and stiring at RT for 3 days. The solvents were removed in vacuuo, the resulting oil was analyzed by NMR which showed that majority was composed of T¹ and T² siloxane units with minor part of T³ (no T⁰).

The oil was dissolved in 15 ml of freshly distilled and degassed THF by the help of magnetic stirrer. After that the solution of free 1,3-di-1-adamantylimidazol-2-ilydene in THF (1/4 mmol) was added and mixture refluxed for 48 hours under nitrogen. After the removal of the solvent by rotary evaporator the solid residue weighted 2,20 g, 95 % yield. The solution was examinated with NMR and IR (KBr, cm⁻¹): one very strong siloxane band at 1115.

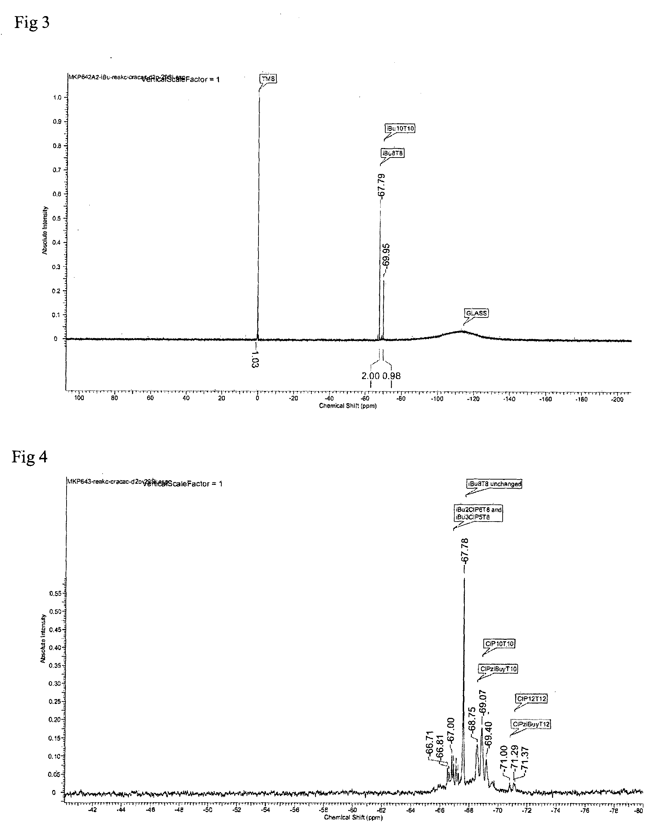

The analysis of reaction mixture gave following results:
iBu₈T₈: ²⁹Si NMR (THF, Cr(acac)₃, TMS): -67.79 ppm, 67 mole %,
iBu₁₀T₁₀: ²⁹Si NMR (THF, Cr(acac)₃, TMS): -69.95 ppm, 33 mole %, Fig 3.

### Example 6

### Scrambling the substituents between iBu₈T₈ and CIP₈T₈ by 1,3-di-1-adamantylimidazol-2-ilydene

In 15 ml of freshly distilled THF 1.29 g of octa(3-chloropropylsilsesquioxane) and 1.09 g of octa(isobutylsilsesquioxane) were dissolved and to this mixture ¼ mmol of free 1,3-bis-(1-adamantyl)imidazol-2-ilydene in THF was added and mixture refluxed for 48 hours under nitrogen. The resulting solution was examined with NMR. The signals in region -67.30 67.44 ppm could be attributed to iBu₂ClP₆T₈ (the iBu groups on diagonal of the same face) and iBu₃ClP₅T₈ (the iBu groups on the same face), the signal on - 67.78 ppm is the rest of iBu₈T₈, the group of signals between -68.78 -69.40 ppm are T₁₀ signals and signal at -69.07 represents ClP₁₀T₁₀, signals between -71.02 to -71.37 ppm correspond to T₁₂ signals; signal at -71.29 ppm represents the ClP₁₂T₁₂; Fig 4. The evaporation of solvent gave 2.35 g of PSS mixture.

## Claims

1. A method for preparation of polyhedral silsesquioxanes by N-heterocyclic carbenes mediation comprising: dissolving at least one precursor for preparation of polyhedral silsesquioxanes in an organic solvent, or in mixture of solvents; adding an N-heterocyclic carbene, or N-heterocyclic carbene precursor under inert atmosphere; reacting said mixture at temperature ranging from -30 °C to 150 °C for time period ranging from 5 minutes to 10 days; and isolating a polyhedral silsesquioxane by precipitation or solvent removal.

2. A method according to claim 1, wherein the precursor for preparation of polyhedral silsesquioxanes is chosen from the group comprising: polymeric alkylsilsesquioxanes, polymeric arylsilsesquioxanes, already formed polyhedral silsesquioxanes and hydrolyzates of trifunctional silanes.

3. A method according to claims 1-2, wherein the N-heterocyclic carbene is chosen from the group comprising: substituted imidazol-2ylidenes and their fused analogs; substituted imidazolin-2-ylidenes and their fused analogues; substituted 4,5-dihydro-1H-1,2,4-triazol-5-ylidenes and their fused analogues; substituted thiazol-2-ylidenes and their fused analogues; substituted hexahydropyrimin-2-ylidenes and their fused analogues; substituted 1,3-diazepam-2-ylidenes and their fused analogues; and substituted perimidin-2-ylidenes.

4. A method according to claims 1-3, wherein the N-heterocyclic carbene precursor is chosen from group comprising: bis(1,3-dialkylimidazol-2-ylidene) silver(I) dihaloargentates(I); bis(1,3-dialkylbenzimidazol-2-ylidene) silver(I) dihaloargentates(I); adducts of free carbenes with aliphatic and aromatic alcohols, chloroform and fluoroform; 1,3-disubstituted-2-(oligofluorophenyl)-imidazolidines and 1,3-disubstituted-imidazolium-2-carboxylates.

5. A method according to claims 1-4, wherein the N-heterocyclic carbene or its precursor is used in a concentration that the maximum final concentration of liberated carbene is from 0.1 mole ‰ to 10 mole % per silicon.

## Patentansprüche

1. Verfahren zur durch N-heterozyklisches Carben vermittelte Herstellung von polyedrische Silsesquioxanen umfassend: Auflösen von weinigstens einem Vorläufer zur Herstellung von polyedrische Silsesquioxanen in einem organischen Lösungsmittel oder Lösungsmittelgemisch; Zugabe eines N-heterozykiischen Carbens, oder eines N-heterocyclischen Carbenvorläufers unter Inertatmosphäre; Umsetzen der Mischung bei einer Temperatur im Bereich von 30°C. bis 150°C für eine Zeitspanne von 5 Minuten bis 10 Tage; und Isolieren eines polyedrischen Silsesquioxans durch Fällung oder Lösungsmittelentfernung.

2. Verfahren nach Anspruch 1, wobei der Vorläufer zur Herstellung von polyedrischen Silsesquioxanen aus der Gruppe ausgevrählt ist, die Folgendes umfasst: polymere Alkylsilsasquioxane, polymere Arylsilsesquioxane, bereits gebildete polyedrische Silsesquioxane und Hyörolysate von trifunktionellen Silanen.

3. Verfahren nach Ansprüchen 1-2, wobei das N-heterocyclische Carben aus der Gruppe ausgewählt ist, die Folgendes umfasst: substituierte Imidazol-2-ylidene und deren kondensierte Analoga; substituierte Imidazolin-2-ylidene und deren kondensierte Analoga; substituierte 4,5-Dihydro-1H-1,2,4-triazol-5-ylidene und deren kondensierte Analoga; substituierte Thiazol-2-ylidene und deren kondensierte Analoga; substituierte Hexahydropyrimin-2-ylidene und deren kondensierte Analoga; substituierte 1,3-Diazepam-2-ylidene und deren kondensierte Analoga; und substituierte Perimidin-2-ylidene.

4. Verfahren nach Ansprüchen 1-3, wobei der N-heterocyclische Carbenvorläufer aus der Gruppe ausgewählt ist, die Folgendes umfasst: Bis (1,3-dialkylimidazol-2-yliden) Silber (i) Dihaloargentate (i); Bis (1,3-dialkylbenzimidazol-2-yliden) Silber (i) Dihalogenargentate; Addukten von freien Carbenen mit aliphatischer und aromatischen Alkoholen, Chloroform und Fluoroform; 1,3-Disubstituierte-2-(oligofluorophenyl)-imidazolidine und 1,3-Disubstituierte-imidazolium-2-Karboxylate.

5. Verfahren nach Ansprüchen 1-4, wobei das N-heterozyklische Carben oder dessen Vorläufer in einer Konzentration verwendet wird, so dass die maximale Endkonzentration an freigesetztem Carben von 0,1 Mol-‰ bis 10 Mol-‰ pro Silicium beträgt.

## Revendications

1. Procédé de préparation de silsesquioxanes polyédriques à médiation par des carbènes N-hétérocycliques, comprenant : la dissolution d'au moins un précurseur pour la préparation de silsesquioxane polyédriques dans un solvant organique ou dans un mélange de solvants ; l'addition d'un carbène N-hétérocyclique, ou d'un précurseur de carbène N-hétérocyclique sous atmosphère inerte ; la réaction dudit mélange à température comprise entre -30 °C et 150 °C pour une durée comprise entre 5 minutes et 10 jours; et isolement d'un silsesquioxane polyédrique par précipitation ou par élimination du solvant.

2. Procédé selon la revendication 1, dans lequel le précurseur pour la préparation de silsesquioxanes polyédriques est sélectionné dans le groupe comprenant : alkylsilsesquioxanes polymères, arylsilsesquioxanes polymères, silsesquioxanes polyédriques déjà formés et des hydrolysats de silanes trifonctionnels.

3. Procédé selon les revendications 1-2, dans lequel le carbène N-hétérocyclique est sélectionné dans le groupe comprenant : imidazol-2 ylidènes substitués et leurs analogues condensés ; imiriazoline-2-ylidénes substitués et leurs analogues condensés ; 4,5-dihydro-1H-1,2,4-triazol-5-ylidènes substitués et leurs analogues condensés ; thiazcl-2-ylidènes substitués et leurs analogues condensés ; hexahydropyrimin-2-ylidènes substitués et leurs analogues condensés ; 1,3-diazépines-2-ylidènes substitués et leurs analogues condensés ; et perimidin-2-ylidènes substitués.

4. Procédé selon les revendications 1-3, dans lequel le précurseur de carbène N-hétérocyclique est sélectionné dans le groupe comprenarat : bis(1,3-dialkylmidazol-2-ylidéne) argent(I) dihaloargentates(I) ; bis(1,3-dialkylbenzirnidazol-2-ylidène) argent(I) dihaloargentates(I) : des produits d'addition de carbènes libres avec des alcools aliphatiques et aromatiques, du chloroforme et du trifiuorométhane; 1,3-disubstitué-2-(oligofluorophenyl)-imidazolidines et 1,3-disubstitué-imidazolium-2-carboxylates.

5. Procédé selon les revendications 1-4, dans lequel le carbène N-hétérocyclique ou son précurseur est utilisé dans une concentration que la concentration finale maximale de carbène libéré est de 0,1 ‰ en moles à 10 % en moles par silicium.
